# EUROPEAN PATENT APPLICATION

(11) **EP 1 705 025 A1**
(43) Date of publication of application: **27.09.2006**
(21) Application number: 05783654.6
(22) Date of filing: 13.09.2005
(51) Int. Cl.: B41J 29/38, G06K 17/00, G06K 19/07, B41J 2/32

(54) **PRINTER**

(30) Priority: 25.10.2004 JP 2004309090
(71) Applicant: Kabushiki Kaisha Sato, Tokyo 150-0013 (JP)
(72) Inventor: KYOI, Toshiaki, . (JP)
(74) Representative: Denness, James Edward
(86) International application number: PCT/JP2005/016800
(87) International publication number: WO 2006/046359

(57) **Abstract**

The printer is capable of reading and writing data to a RFID tag included in a continuous label without any restriction for deploying an antenna on the continuous label and an antenna on the printer.

The printer, in accordance with receiving a command for identifying the position of an antenna 412 of a RFID tag 500 included in a label 41, feeds a continuous label 200 such that the antenna 412 of the RFID tag 500 is in alignment with an antenna 24 for a RFID read/write unit on the printer in the direction perpendicular to the label feed, thereby a reading and a writing of data to an IC chip 411 of the RFID tag 500 is performed.

## Description

### BACKGROUND OF THE INVENTION

### 1. Field of the Invention

The present invention relates to a printer capable of writing and reading a data to a Radio Frequency Identification (RFID) tag.

### 2. Description of the Related Art

Conventional means for reading or writing data to a continuous label provided with a RFID tag, when the continuous label stops feeding, requires a position adjustment of the label such that the distance between an antenna of the RFID tag and an antenna of the RFID reader/writer for reading or writing to the RFID tag is in a range suitable for the RFID reader/writer to read/write to the RFID tag.
Furthermore, IC (Integrated Circuit) detecting means may detect a position of an IC on a sheet provided with the IC by wirelessly communicating with the IC. Therefore, it is possible to control the distance between an IC and a thermal head and platen roller of a printer without needing a special sheet including marks for indicating the position of the IC, thus preventing any damage caused to the thermal head by the thickness of the IC.

The conventional means has a disadvantage that there are restrictions on the size of sheet and its printable area in accordance with the restriction of the deployment of the RFID tag. Further, even if the RFID reader/writer has a moveable antenna, the problem is that free layout of the RFID tag on the sheet is restricted by the dimensions of the printer.
Furthermore, an IC detecting means detects the position of an IC by non-contact communication with an IC on a sheet provided with the IC. The distance between a thermal head and a platen roller, without having a special sheet provided with a mark for pointing the IC, is controlled, therefore the damage of the thermal head caused by the IC thickness is preventable. However a capability for adjusting the position between the antenna of the RFID tag included in the continuous label and the antenna of the RFID reader/writer is not supported.

### SUMMARY OF THE INVENTION

The present invention is contrived in view of the above problems, and an object of the present invention is to provide a printer, which, after adjusting the position of the continuous label to be in the allowable range of distance between an antenna of the RFID tag included in the continuous label and an antenna of the RFID reader/writer based on a command for identifying the position of the RFID tag, is capable of reading or writing a date to the RFID tag.

The printer, described as Claim 1, for printing on a continuous label provided with a RFID tag, comprises a feeding means for feeding the continuous label, and a printing means for printing print data on the continuous label, and a RFID read/write means for reading or writing the data to the RFID tag provided in the continuous label, and a receiving means for receiving the command for identifying the position of the RFID tag, and the detecting means for detecting the pitch size of the continuous label, whereby in use the feeding means, based on the position of the RFID tag specified by the command received by the receiving means and a result detected by the detecting means, feeds the continuous label to a distance within the communicable range between the RFID tag and the RFID read/write means, and the RFID read/write means, when the distance between the RFID tag and the RFID read/write means comes within the communicable range, reads or writes the data to the RFID tag.
Advantageously, the feeding means stops feeding of the continuous label when the distance between the RFID tag and the RFID read/write means comes in the communicable range.

According to the printer for this invention, the position of the RFID tag included in the continuous label can be specified by the command. Accordingly, the position of the RFID tag can be identified by receiving the command, then the position adjustment of the continuous label to be in the allowable range of distance between the RFID tag and the RFID read/write means is made, thereby data reading or writing to the RFID tag is made. Therefore, without regard for any restriction for positioning the RFID tag to the continuous label and for positioning the RFID read/write means in relation to the printer, the layout for deploying the RFID tag and/or the RFID read/write means to the continuous label and to the printer is relatively free.

### BRIEF DESCRIPTION OF THE DRAWINGS

Fig.1 is a block diagram showing a printer of an embodiment of the present invention.
Fig.2 is a pattern diagram showing a behavior of the embodiment of the present invention.
Fig.3 is a perspective plain view of a label showing a RFID tag embedded therein.
Fig.4 is a sectional view showing the label having the RFID tag.
Fig.5 is a flow-chart showing a processing for the embodiment of the invention.
Fig.6 is a single example of a table showing the position of the antenna.
Fig.7 is a pattern diagram showing a behavior of the embodiment of the present invention with the label.

### DESCRIPTION OF THE PREFERRED EMBODIMENTS

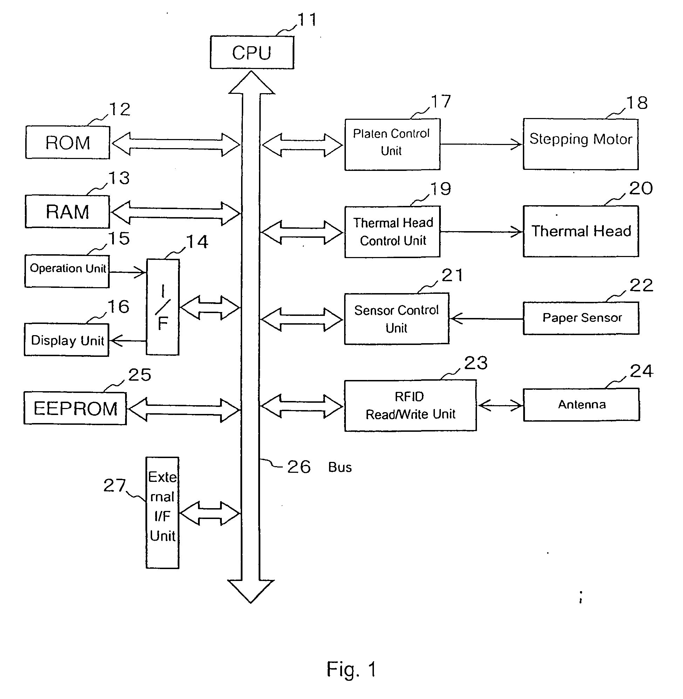

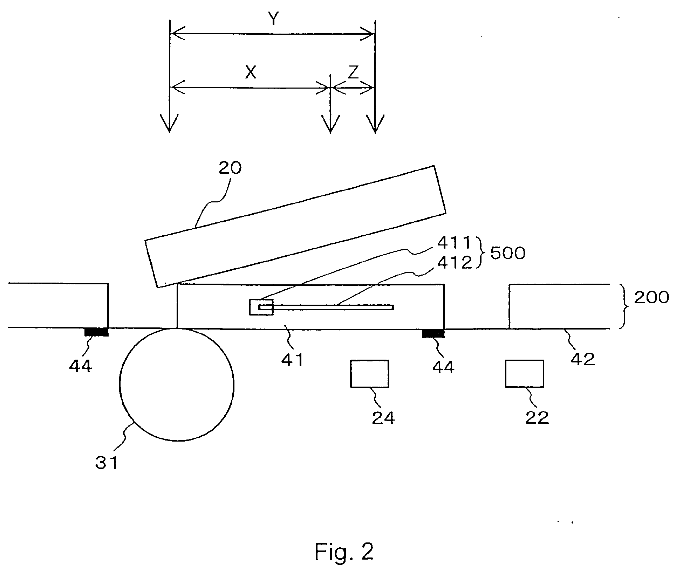

Fig.1 is a block diagram showing a printer of an embodiment of the present invention. As described in the figure, the printer, functioning under a control program stored in a ROM 12 (Read Only Memory) as described below and controlling each part of the printer, comprises a CPU 11 (Central Processing Unit) for processing each task, and the ROM 12 for storing data for programs and fonts, and a RAM 13 (Random Access Memory) for storing temporary data required for processing by the CPU 11, and an operation unit 15 comprising an input unit such as a numeric keypad for inputting commands and data, and a display unit 16 such as a LCD (Liquid Crystal Display) for displaying data thereon, and a platen control unit 17 which provides a stepping motor 18 with a pulse signal and drives a platen roller 31 (Fig.2) to be rotated through the stepping motor 18, and a thermal head control unit 19 for activating a thermal head 20 to print by providing with control signals corresponding to print data. The printer further comprises a paper sensor 22 and a sensor control unit 21 (as described below). The paper sensor comprises an optical emitter for emitting an optical spectrum, and an optical receiver for sending electronic signals responding to an intensity of the optical spectrum (the amount of the optical spectrum received per unit time) in accordance with the received reflection from the continuous label derived from emitting the optical spectrum by the optical emitter, both the optical emitter and optical receiver deployed on the back surface of the continuous label in a row. The paper sensor 22 provides the sensor control unit 21 with a signal detection derived from the amount of the optical spectrum received by the optical receiver in accordance with an availability of the continuous label and any identical mark printed on the back surface of the continuous label. The sensor control unit 21 controls the paper sensor 22 and provides the CPU 11 with the detected data through a bus 26. The printer further comprises an EEPROM 25 (Electrically Erasable and Programmable Read Only Memory) for storing any optional setting value and a table for showing the antenna's position, and a RFID read/write unit 23 for reading or writing data to the RFID tag 500 in accordance with sending and receiving a signal by radio wave through an antenna 24. Further, any data and command input by the operation unit 15 are sent over the CPU 11 with an interface 14 (I/F) through the bus 26. Furthermore, the display unit 16 displays display data sent over from the CPU 11 with the bus 26 through the I/F 14.

Fig.2 is a pattern diagram showing the behavior of an embodiment of the present invention. As described in the figure, the continuous label 200, which is holdable by both the thermal head 20 and the platen roller 31 and is transferable in accordance with rotary driving of the platen roller 31 by the stepping motor 18, comprises a backing strip 42 and a plurality of labels 41, wherein the plurality of labels are tacked on the backing strip 42 at equally spaced intervals through an adhesive layer 416 as described below. A trailing edge mark 44 for enabling detection of the trailing edge of the label 41, comprising a black rectangular mark, is formed on the back surface thereof at the place corresponding to the trailing edge of the label 41 by methods such as print. Further, the antenna 24 and the paper sensor 22 are positioned on the back surface side of the back strip 42.

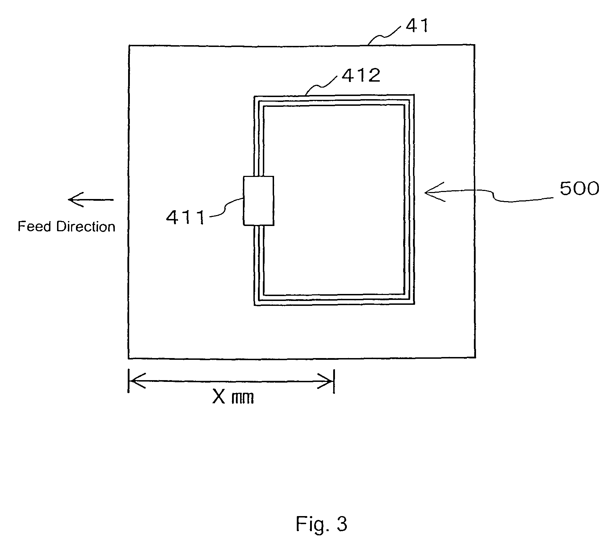

Fig.3 is a perspective plain view showing the label 41. As described in the figure, the RFID tag 500 comprising an IC chip 411 and an antenna 412 is embedded in the label 41. The IC chip 411, sends data stored in the memory of the IC chip 411 over the antenna 24 through the antenna 412 by radio wave. The data is then forwarded to the RFID read/write unit 23 therefrom. The IC chip 411 receives the data through the antenna 412, sent over from the RFID read/write unit 23 through the antenna 24 by radio wave, for storing in the memory comprised in the IC chip 411. Further, there is a distance X mm between a leading edge of the label 41 and the approximate center of the RFID tag 500 in the embodiment of the present invention.

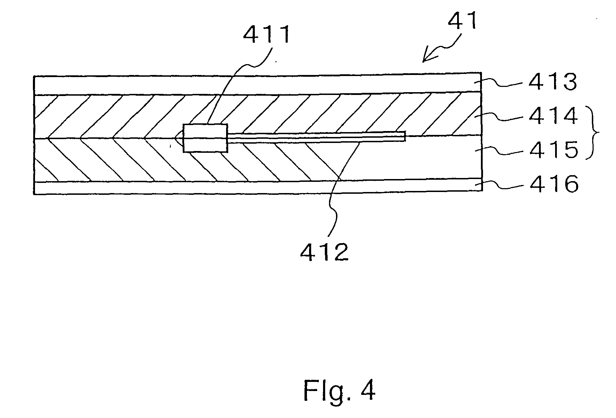

Fig.4 is a sectional view showing a label 41. As shown in the figure, the label 41 comprises transparent films 414, 415 adhered to each other and provided therebetween with RFID tag 500 comprising the IC chip 411 and the antenna 412, and a print layer 413 provided on the surface of the transparent film 414 opposite to the surface contacting the transparent film 415 through the RFID tag 500, and an adhesive layer 416 for tacking on the backing strip 42 provided on the surface of the transparent film 415 opposite to the surface contacting the transparent film 414. Print data is printable on the surface of the print layer 413 by a thermal head 20.

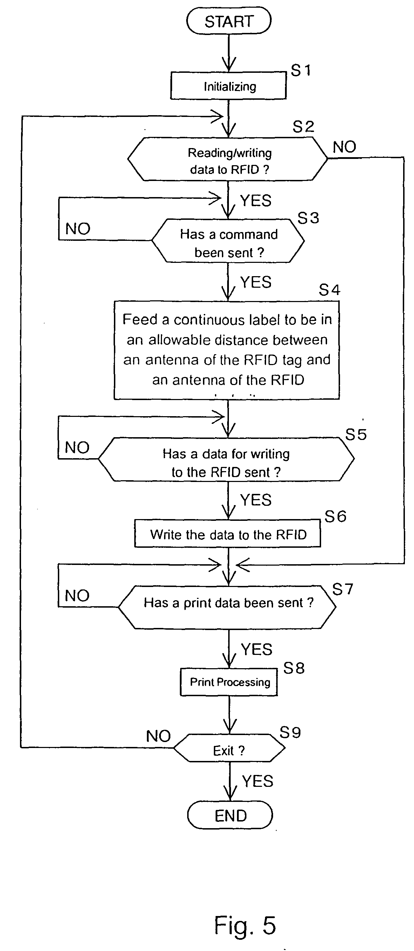

Hereinafter, an operation with the printer according to an embodiment of the present invention is described based on a processing flow-chart in Fig.5. When a printer is powered on, the CPU11 initializes the printer at step S1 firstly according to a control program stored in the ROM 12. In other words, the CPU 11 instructs a platen control unit 17 to feed a continuous label 200 a distance, and further instructs a sensor control unit 21 to detect a trailing edge mark 44 formed on the back surface of the backing strip 42.

A rotary driving of the stepping motor 18 by pulse signals provided from the platen control unit 17 in accordance with an instruction of the CPU11 is conveyed to a platen roller 31 to be rotary driven. Thereby, the continuous label 200 held by both the platen roller 31 and the thermal head 20 therebetween is fed in the feeding direction.

When a trailing edge mark 44 is detected by the paper sensor 22, it signals the sensor control unit 21, which sends detected data to the CPU11 through a bus 26. The CPU 11 on receiving the detected data calculates a position of the trailing edge mark 44 and a position of the leading edge of the label 41, based on the time taken for the data to be received, the distance advanced by the continuous label 200 in that time, and the pitch of the label (a distance between the leading edge of the label 41 and the trailing edge of the label 41). The CPU 11 is capable of retrieving the pitch of the label preinstalled in the EEPROM 25 appropriately. In addition to that, the EEPROM 25 includes data showing the relative position with heating elements of the thermal head 20, the paper sensor 22 and the antenna 24, and data showing the length of the label 41 in the feeding direction. The CPU 11 controls the continuous label 200 to be stopped at a stop position which is the start position for printing (where the leading edge of the label 41 contacts the heating elements of the thermal head 20).

Next, a judgment of whether or not the label 41 includes a RFID tag 500 available and data for reading and writing to the RFID tag 500 is available is made at Step S2. For example, when a continuous label 200 provided with a RFID tag is loaded on the printer and data for indicating data available for reading or writing to the RFID tag 500 is input through an operation unit 15 by an operator, the step S3 starts upon a judgment that the data for reading or writing to the RFID tag 500 has been available. On the other hand, the step S7 starts upon a judgment that the RFID tag 500 has not been included in the label 41 or no data for reading and writing to the RFID tag 500 has been available.

A judgment of whether or not a command for identifying a position of the antenna has been sent from a computer connecting to the printer is made at step S3. The command comprises data for identifying the type of label 41 and an instruction for feeding the continuous label 200 to align the position of the antenna 412 of the RFID tag 500 with the antenna 24 of the printer. Accordingly, upon a judgment that the command has not been sent to the printer, the process of the step S3 is repeated. On the other hand, the step S4 starts upon a judgment that the command has been sent thereto.

The CPU 11, at Step 4, controls the continuous label 200 to be fed for being in an allowable range of distance between the antenna 412 of the RFID tag 500 and the antenna 24 of the RFID read/write unit 23. Thereby, a positioning of the center of antenna 412 of the RFID tag 500 to the antenna 24 is made. The present embodiment shows a relative position such that approximate center of the antenna 412 is positioned upwards vertically over the antenna 24 (position being an extension of a right angle to the feeding direction of the continuous label 200). Once in position, the continuous label 200 stops feeding.

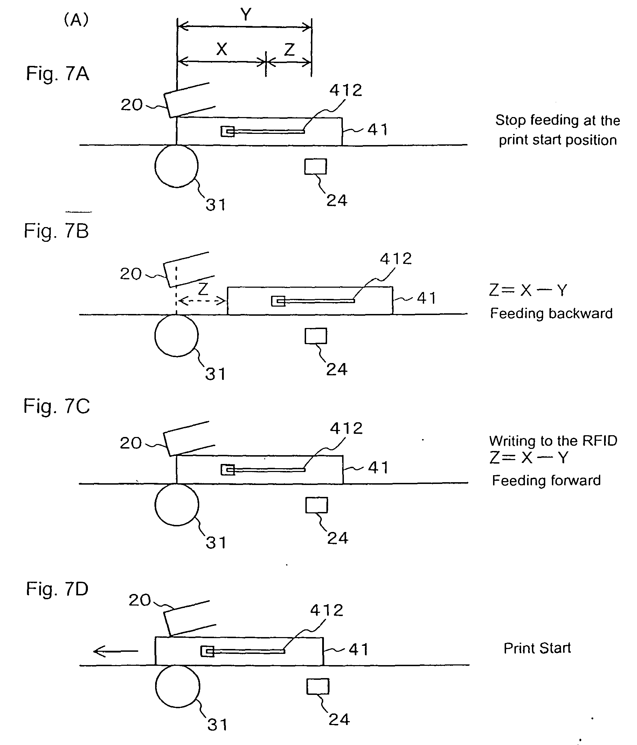

When a leading edge of the label 41 is at the position contacting the heating elements of the thermal head 20, the CPU 11 controls the continuous label 200 to be fed backward a distance determined by the difference between a distance X, being between the leading edge of the label 41 and approximate center of the antenna 412 of the RFID tag 500, and a distance Y being between the heating elements and the antenna 24. The calculating formula using each distance is Z = X - Y wherein the feeding distance is expressed by Z. If the calculated value of Z is below zero as shown in Fig. 7A, the continuous label 200 is fed backwards the distance Z.

Hereinafter, the distance X for identifying the position of the antenna 412 is expressed with an appropriate absolute value. The position of the antenna is defined by the type of the label 41, and a table comprising data for identifying types of the label 41 and data for identifying the position of the antenna and an unique code corresponding to the data for identifying the position of the antenna is preinstalled in the EEPROM 25 for the storage section of the antenna position.

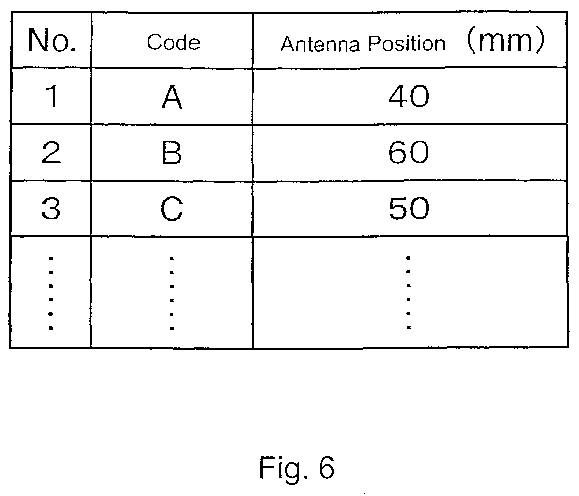

In a single example taken in Fig. 6, a type 1 of the label 41 responding to a code A has 40mm for the position of the antenna, and a type 2 of the label 41 responding to a code B has 60mm for the position of the antenna, further a type 3 of the label 41 responding to a code C has 50mm for the position of the antenna.

Therefore, a position of an antenna responding to the type of the label 41 can be identified by the CPU 11 retrieving data from the EEPROM 25 based on the type of the label 41 included in a command for identifying the position of the antenna (distance X) sent from a computer connected to the printer, or the position of the antenna responding to a code can be identified by the CPU 11 retrieving data from the EEPROM 25 based on the code included in the command for identifying the position of the antenna sent from the computer connecting to the printer.

Next, a judgment of whether or not data for writing to the RFID tag 500 has been sent from a computer is made, and upon a judgment that no data for writing to the RFID tag 500 has been sent therefrom, the process of the step S5 is repeated. Upon a judgment that the data has been sent therefrom on the other hand, the step S6 starts.

At the step S6, data sent from the computer connecting via an external I/F unit 27 is provided to the CPU 11 through the bus 26, and the CPU 11 controls the data to be provided in the RAM 13 for storing temporarily, and then instructs the data retrieved from the RAM 13 to be provided to the RFID read/write unit 23, further to be provided for writing to the RFID tag 500.

The RFID read/write unit 23 sends a signal, responding to the data provided by the CPU 11, by radio wave through the antenna 24. The IC chip 411 of the RFID tag 500 stores the data, sent over from the antenna 24 by radio wave and received through the antenna 412, to a memory comprised in the IC chip 411. Thereafter, the platen control unit 17 under controlling by the CPU 11 controls the continuous label 200 to be fed such that the leading edge of the label 41 contacts the elements of the thermal head 20.

Upon the process completion at the step S6 or a judgment at the step S2 that reading and writing data to the RFID tag 500 has not been made, the step S7 starts for judging whether or not data for printing has been sent over from a computer connected to the printer. Then, upon a judgment that no data for printing has been sent therefrom, the process of the step S7 is repeated. Upon a judgment that the data has been sent therefrom on the other hand, the CPU 11 controls the print data for temporary storing to be provided to the RAM 13, and then the step S8 starts.

At the step S8, the CPU 11 instructs that bit map imaging data, based on a font data in the ROM 12 corresponding to the print data, is generated from the print data retrieved from the RAM 13 and the bit map imaging data provided to the thermal head control unit 19 is printed on to the label 41. Furthermore, the CPU 11 instructs the platen control unit 17 to feed the continuous label 200.

The platen control unit 17 upon an instruction from the CPU 11 sends a control signal to the stepping motor 18 for being rotary driven. The rotary driving force of the stepping motor 18 is conveyed to the platen roller 31 for driving thereof, and the continuous label 200 is fed thereby. Further, the thermal head control unit 19 instructed by the CPU 11, based on the bit map imaging data corresponding to the print data provided by the CPU 11, controls the thermal head 20 to print the print data on the surface of a print layer 413 of the label 41. The CPU 11, based on the detected data provided from the sensor control unit 21, determines at when the print data is printed on the continuous label 200. After the print is completed, the CPU 11 controls the continuous label 200 to be fed, such that the leading edge of succeeding label 41 contacts the heating elements of the thermal head 20.

Next at the step S9, a judgment of whether or not successive processes should be terminated is made. Upon a judgment of no requirement of the termination, the successive processes from the step S2 are repeated. On the other hand, upon a judgment of the requirement of the termination, the processes are terminated. Thus, when quantities for printing labels are specified for example, whether or not printing on the label 41 and writing to the RFID tag 500 according to the specified quantities were completed is judged. Then, upon a judgment of the incompletion of the printing and writing with the specified quantities, successive processes from the step S2 are repeated. Upon a judgment of the completion of the printing and the writing with the specified quantities on the other hand, the processes are terminated.

Fig.7 is a diagram showing the behavior of the embodiment of the present invention with the label 41. When the process of the step S1 is completed, as shown in Fig. 7A, the leading edge of the label 41 is laid for contacting the elements of the thermal head 20. Next at step S4 in the Fig. 5, the continuous label 200 is fed backward a distance Z, thus as shown in Fig. 7B, the approximate center of the antenna 412 of the RFID tag 500 is positioned over the antenna 24. In this situation, the label 41 stops feeding with control by the CPU11.

Next, after the completion of writing data to the RFID tag 500 at the step S6 in the Fig. 5, the platen control unit 17 under the control of the CPU 11 is controlled to feed forward the continuous label 200 a distance Z, then as shown in Fig.7C, the leading edge of the label 41 returns to the position contacting the elements of the thermal head 20. Afterwards, at the step S8 in the Fig.5 the continuous label 200 is fed in the feeding direction in accordance with printing thereon as shown in Fig.7D.

As described above, the present invention provides that, based on a command sent from a computer, the approximate center of an antenna 412 of a RFID tag 500 is positioned over an antenna 24 of a printer, which makes data readable and writable to the RFID tag 500. Accordingly, if the command corresponding to a type of a label 41 of a continuous label 200 loaded is sent to the printer, reading and writing data to the RFID tag 500 without regard for the type of the continuous label 200 being used is assured. Therefore, it is not necessary to restrict deployment of the RFID tag 500 and the label 41 on the continuous label 200, and another restriction for sizing the continuous label 200 and for making printable space can be minimized. Further, the deployment of an antenna 24 on the paper route can be freely made.

Further, the present invention, as the position of the antenna 412 of the RFID tag 500 is identifiable in accordance with a command received, provides a reduction of the processing time over the conventional means for detecting the position of the antenna 412 by feeding a paper.

In addition, according to the embodiment of the present invention, a trailing edge mark corresponding to the trailing edge of the label 41 is provided on the back surface of the backing strip 42. Furthermore, a leading edge mark responding to a leading edge of the label 41 may be provided thereon for detecting the leading edge of the label 41 with a paper sensor 22.

Further, the embodiments of the present invention described in the case of writing data to the RFID tag 500, however, it is equally applicable to the case of retrieving data from the RFID tag 500.

Further, a thermal transfer printer with ink ribbon and a direct thermal printer with a thermal paper capable of being color reacted by thermal energy are applicable to the printing means with data on the label 41 for this invention.

Further, it goes without saying that the embodiments can be applied to a printer changed appropriately without departing from the scope of the invention.

## Claims

1. A printer capable of printing on a continuous label provided with a RFID tag, wherein the printer comprises:
a feeding means for feeding the continuous label;
a printing means for printing print data on the continuous label;
a RFID read/write means for reading or writing data to the RFID tag provided on the continuous label;
a receiving means for receiving a command for identifying the position of the RFID tag; and
a detecting means for detecting the pitch of the continuous label;
whereby in use the feeding means, based on the position of the RFID tag specified by the command received by the receiving means and the result detected by the detecting means, feeds the continuous label to a distance within the communicable range between the RFID tag and the RFID read/write means, and
the RFID read/write means, when the distance between the RFID tag and the RFID read/write means comes within the communicable range, reads or writes the data to the RFID tag.

2. The printer according to Claim 1, wherein the feeding means stops feeding the continuous label when comes in the distance within the communicable range between the RFID tag and the RFID read/write means.
